# EUROPEAN PATENT APPLICATION

(11) **EP 2 337 317 A1**
(43) Date of publication of application: **22.06.2011**
(21) Application number: 09819076.2
(22) Date of filing: 16.09.2009
(51) Int. Cl.: H04M 1/247, G06F 3/048, H04M 1/725

(54) **PORTABLE ELECTRONIC DEVICE, CHARACTER INPUT SCREEN DISPLAY METHOD, AND PROGRAM**

(30) Priority: 10.10.2008 JP 2008263991
(71) Applicant: NEC Corporation, Minato-ku Tokyo 108-8001 (JP)
(72) Inventor: TOBA, Hiroyuki, Kodama-gun Saitama 367-0297 (JP)
(74) Representative: Glawe, Delfs, Moll
(86) International application number: PCT/JP2009/066169
(87) International publication number: WO 2010/041541

(57) **Abstract**

A portable telephone determines whether or not an entry that serves to select a particular character input mode has been accepted. If the portable telephone determines that the entry that serves to select the particular character input mode has been accepted, the portable telephone displays a list screen on which lists of particular types of characters are categorized and are indicated using tabs corresponding to the types at a part of a character input screen. Thereafter, if the portable telephone accepts an entry from the user that serves to select a tab, the portable telephone selects a tab corresponding to the entry from the list screen and displays a list screen of the particular type of character corresponding to the selected tab on a character input screen.

## Description

### TECHNICAL FIELD

The present invention relates to portable electronic devices, character input screen display methods, and programs that accept inputs of characters and symbols.

### BACKGROUND ART

In recent years, upon transmission of electronic mail from an ordinary portable electronic device such as a portable telephone, special characters such as pictorial characters as well as ordinary characters such as Hiragana characters and alphanumeric characters have been used. Thus, the number of types of characters that can be input into portable electronic devices tends to increase.

Generally, to input particular types of characters on a portable electronic device, whenever an entry, that serves to press a particular key to which predetermined types of characters (for example, Chinese characters, Katakana characters, alphabetic characters, numeric characters, symbols, pictorial characters, moving pictorial characters, and so forth) that can be input on the portable electronic device are assigned, is accepted from the user, the type of character that can be input is changed to another one.

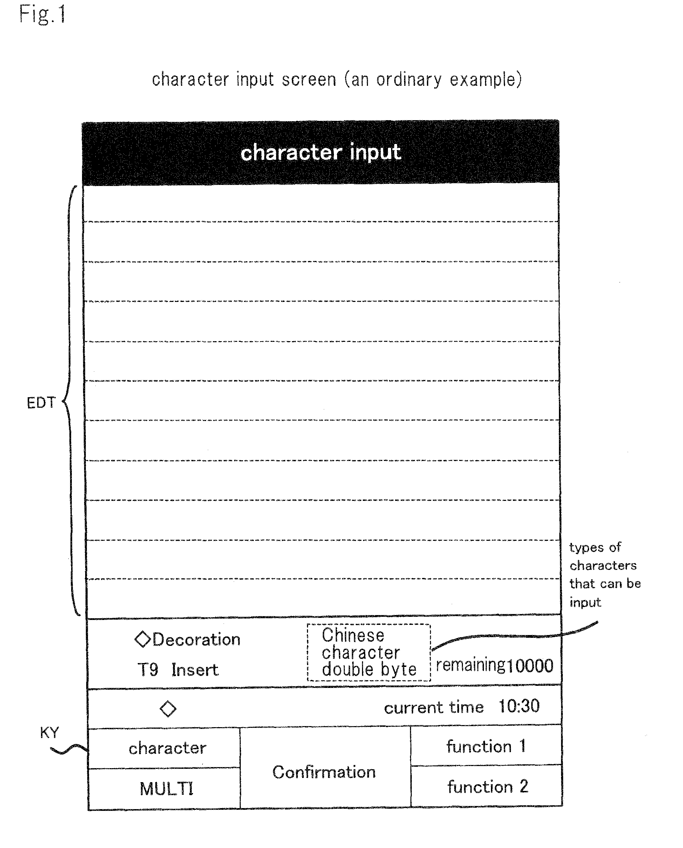

In such a method, while a character input screen, for example, as shown in Fig. 1 is displayed, if an entry that serves to press a particular key KY is accepted, the type of character that can be input is changed to another one. For example, if the particular key KY is pressed the first time, the input mode is changed to a double byte symbol input mode; if the particular key KY is pressed second time, the current input mode is changed to a pictorial character input mode. In the example shown in Fig. 1, as the type of character is changed to another one, an indication of the "type of character that can be currently input" represented by a dotted rectangular box shown in Fig. 1 is changed.

A technique that improves convenience to the user in the case in which an entry that serves to change a function of the portable electronic device is accepted from him or her has been proposed (for example, refer to Patent Literature 1).

In the technique disclosed in Patent Literature 1, the contents of processes that can be executed on a plurality of screens are indicated using tabs that are caused to correspond thereto. In the case in which the user selects his or her desired tab with a dedicated selection key disposed to select a tab, the current screen is changed to a screen that displays the contents of the process that are caused to correspond to the tab.

### RELATED ART LITERATURE

### PATENT LITERATURE

Patent Literature 1: JP2004-064269A

### SUMMARY OF THE INVENTION

### PROBLEMS TO BE SOLVED BY THE INVENTION

However, in the method that changes the type of character that can be input to another one whenever the above-described particular key is pressed, as the number of types of characters that can be input increases, it is necessary to increase the number of types of characters that are assigned to the particular key.

In other words, if the number of types of characters that can be input is large, there is a problem in which the number of times that the user presses the particular key becomes large, which results in an imposition in that he or she needs to perform a cumbersome operation to select his or her desired type of character.

Thus, the user needs to experimentally memorize the number of times he or she has pressed the particular key and the types of characters that can be input corresponding to the number of times so as to smoothly select his or her desired type of character. However, if there are many types of characters that can be input, this raises another problem in that it becomes difficult for the user to memorize them.

The operation in which the user selects his or her desired function on a portable electronic device that has a limited number of keys reduces user convenience.

In addition, if the technique disclosed in Patent Literature 1 is simply applied to a character input screen that requires the user to change the type of character while causing a document data editing area EDT as shown in Fig. 1 to be displayed, there is a further problem in which the document data editing area EDT is also changed to a screen that displays the contents of a process, resulting in reducing user convenience.

An object of the present invention is to provide portable electronic devices, character input screen display methods, and programs that can solve the above-described problems.

### MEANS THAT SOLVE THE PROBLEM

To solve the above-described problems, a portable electronic device according to the present invention comprises a plurality of input buttons that serve to input characters; a display section that displays an editing screen that serves to edit a sentence using the characters that have been input; a storage section that categorizes particular types of characters and stores them as categorized; an input screen control section that causes said display section to display a particular mode selection key that serves to change to a particular character input mode in which said particular types of characters are input; and a list display control section that reads said particular types of characters from said storage section and causes said display section to display a plurality of tabs caused to correspond to the particular types of characters that have been read and a type of character caused to correspond to a first tab that is any one of the plurality of tabs such that they do not entirely cover said editing screen if the particular mode selection key displayed on said display section is selected by a user, wherein said list display control section changes a type of character to be displayed on said display section from a type of character caused to correspond to said first tab to a type of character caused to correspond to a second tab other than said first tab if said second tab other than said first tab of the plurality of tabs that said display section displays is selected by the user.

To solve the above-described problems, a character input screen display method according to the present invention comprises an input screen control process that causes a display section that displays an editing screen that serves to edit a sentence using characters that are input through a plurality of input buttons that serves to input characters to display a particular mode selection key that changes to a particular character input mode in which particular types of characters are input; and a list display control process that causes said display section to display a plurality of tabs caused to correspond to the particular types of characters and a type of character caused to correspond to a first tab that is any one of the plurality of tabs such that they do not entirely cover said editing screen if the particular mode selection key displayed on said display section is selected by a user, wherein said list display control process changes a type of character to be displayed on said display section from a type of character caused to correspond to said first tab to a type of character caused to correspond to a second tab other than said first tab if said second tab other than said first tab of the plurality of tabs displayed by said display section is selected by the user.

A program for causing a computer, is to cause a portable electronic device that has a display section that displays an editing screen that serves to edit a sentence using characters that are input to execute the procedures comprising an input screen control procedure that causes said display section to display a particular mode selection key that serves to change to a particular character input mode in which particular types of characters are input; and a list display control procedure causes said display section to display a plurality of tabs caused to correspond to the particular types of characters and a type of character caused to correspond to a first tab that is any one of the plurality of tabs such that they do not entirely cover said editing screen if the particular mode selection key displayed on said display section is selected by a user, wherein said list display control process changes a type of character to be displayed on said display section from a type of character caused to correspond to said first tab to a type of character caused to correspond to a second tab other than said first tab if said second tab other than said first tab of the plurality of tabs displayed by said display section is selected by the user.

### EFFECT OF THE INVENTION

According to the present invention, a portable electronic device having a plurality of input buttons that serve to input characters causes a display section to display an editing screen that serves to edit a sentence using the characters that have been input. Then, the portable electronic device categorizes particular types of characters and stores them as categorized. Then, the portable electronic device causes a particular mode selection key that serves to change to a particular character input mode in which the particular types of characters are input to be displayed. Then, the portable electronic device reads the particular types of characters from the storage section and causes the display section to display a plurality of tabs caused to correspond to the particular types of characters that have been read and a type of character caused to correspond to a first tab that is any one of the plurality of tabs such that they do not entirely cover the editing screen if the particular mode selection key displayed on the display section is selected by a user. Then, the portable electronic device changes a type of character to be displayed on the display section from a type of character caused to correspond to the first tab to a type of character caused to correspond to a second tab other than the first tab if the second tab other than the first tab of the plurality of tabs that the display section displays is selected by the user.

In such a structure, even if the user inputs a particular type of character such as pictorial character and symbol on a portable electronic device having a limited number of keys arranged due to ongoing demand for miniaturization, he or she can easily change the current screen to a screen that accepts an input of the particular type of character, without reducing convenience to him or her who edits document data displayed on the display with which the portable electronic device is provided.

### BRIEF DESCRIPTION OF DRAWINGS

[Fig. 1 is a schematic diagram showing an example of a screen structure of a character input screen displayed on an ordinary portable telephone.
[Fig. 2] is a schematic diagram showing the appearance of a portable telephone according to an embodiment of the present invention.
[Fig. 3] is a schematic diagram showing the internal structure of the portable telephone shown in Fig. 2.
[Fig. 4] is a schematic diagram showing the structure of a character input control section shown in Fig. 3.
[Fig. 5] is a schematic diagram showing an example of the screen structure of a character input screen in the state in which a pictorial character and symbol input mode has not been selected.
[Fig. 6] is a schematic diagram showing a first example of the screen structure of the character input screen in the state in which the pictorial character and symbol input mode has been selected.
[Fig. 7] is a schematic diagram showing a second example of the screen structure of the character input screen in the state in which the pictorial character and symbol input mode has been selected.
[Fig. 8] is a schematic diagram showing a third example of the screen structure of the character input screen in the state in which the pictorial character and symbol input mode has been selected.
[Fig. 9] is a flowchart showing an operation of the portable telephone when it has accepted an input of characters from a user.

### BEST MODES THAT CARRY OUT THE INVENTION

### (Embodiment 1)

Next, portable electronic devices (including character input screen display methods and programs) will be described.

In this descriptive example, although the case, in which the portable electronic device according to the present invention is portable telephone 1, will be exemplified, the portable electronic devices according to the present invention may be any portable electronic devices such as PDAs (Personal Digital assistants).

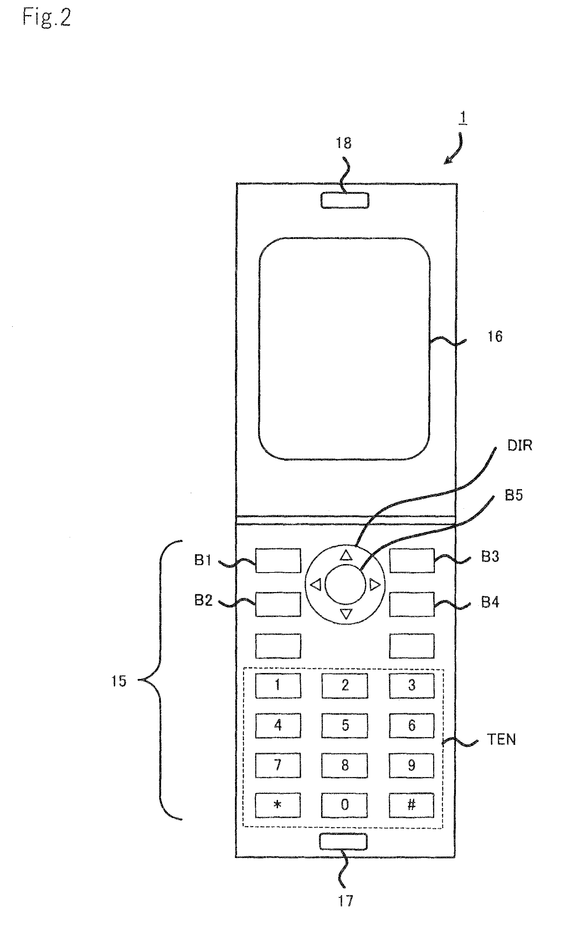

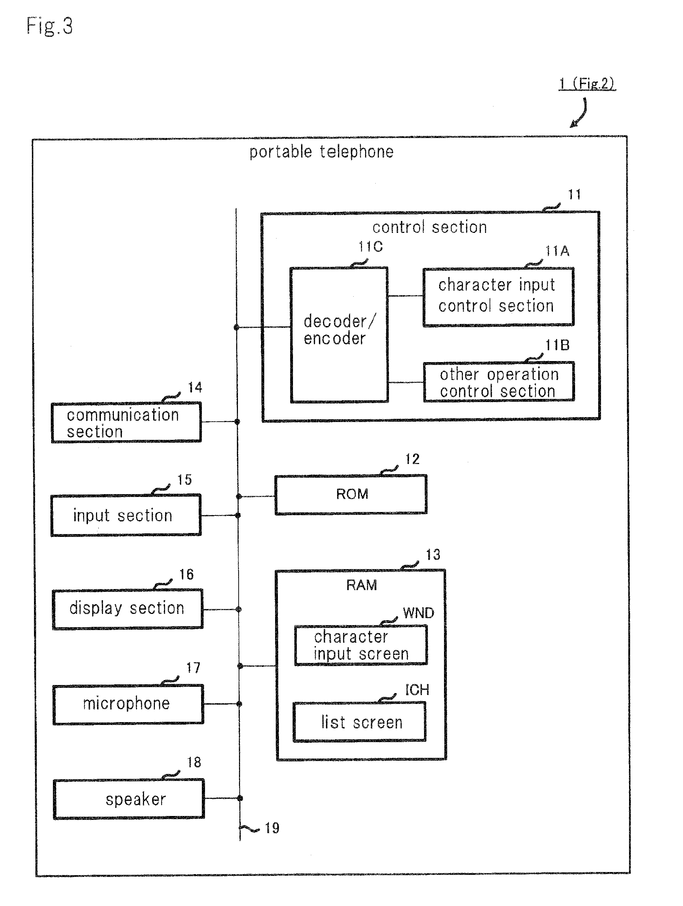

As shown in Fig. 2, portable telephone 1 is a portable electronic device that is structured such that it can accept an input of characters from the user and that is provided with input section 15, display section 16, microphone 17, and speaker 18. Input section 15, display section 16, microphone 17, and speaker 18 will be described later with reference to Fig. 3.

Next, the structure of portable telephone 1 shown in Fig. 2 will be described.

As shown in Fig. 3, portable telephone 1 shown in Fig. 2 is provided with control section 11, ROM (Read Only Memory) 12, RAM (Random Access Memory) 13, communication section 14, and bus 19 in addition to input section 15, display section 16, microphone 17, and speaker 18, which have been described above.

By inputting and outputting various types of signals among ROM 12, RAM 13, communication section 14, input section 15, display section 16, microphone 17, and speaker 18 through bus 19, control section 11 functions to control the overall operation of portable telephone 1.

In addition, control section 11 is provided with an ordinary electronic mail function. In other words, control section 11 performs a process that reads electronic mail in which communication section 14 receives from the outside, a process that newly creates electronic mail, a process that reads electronic mail stored in RAM 13 or the like, a process that inquires of a mail server (not shown) whether or not electronic mail is left therein through a network (not shown) to which portable telephone 1 is connected, and other processes.

In this descriptive example, control section 11 has character input control section 11A that controls each operation performed when an input of characters is accepted from the user, other operation control section 11B that controls individual operations other than those performed when an input of characters is accepted, and decoder/encoder 11C.

In this descriptive example, when character input control section 11A and other operation control section 11B control their individual operations, they input and output signals that serve to control the individual operations among ROM 12, RAM 13, communication section 14, input section 15, display section 16, microphone 17, and speaker 18 through bus 19.

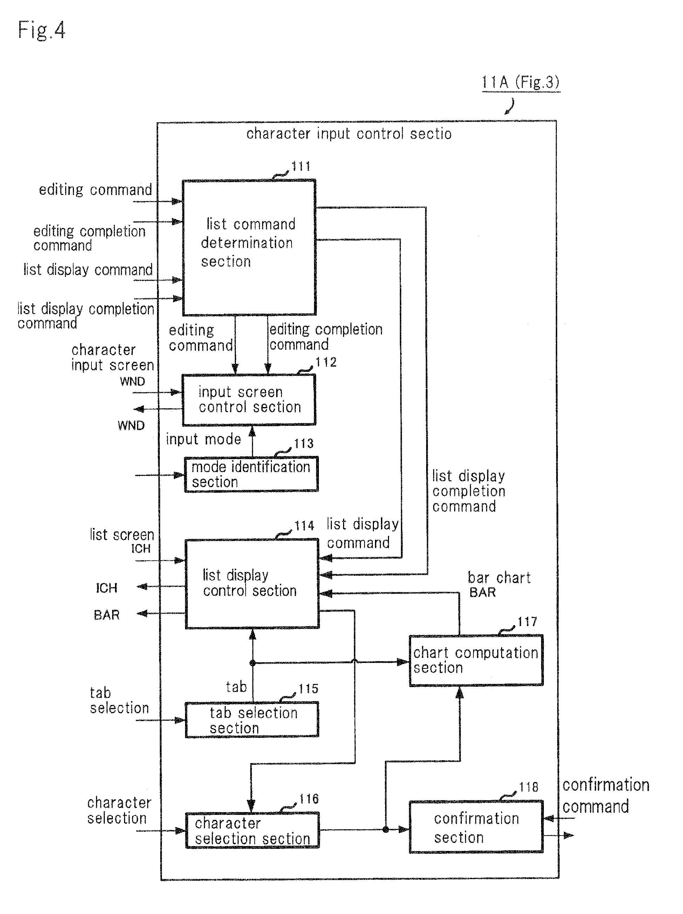

In addition, as shown in Fig. 4, character input control section 11A has list command determination section 111, input screen control section 112, mode identification section 113, list display control section 114, tab selection section 115, character selection section 116, chart computation section 117, and confirmation section 118.

List command determination section 111 determines whether or not input section 15 has accepted an entry that serves to edit document data (for example, text of electronic mail or the like) from the user. If list command determination section 111 determines that the entry that serves to edit document data has been accepted, an "editing command" that causes a character input screen WND to be displayed is output to input screen control section 112.

In addition, after list command determination section 111 determines that the entry that serves to edit document data has been accepted from the user, then list command determination section 111 determines whether or not input section 15 has accepted an entry that serves to complete the editing from the user. If list command determination section 111 determines that the entry that serves to complete the editing of document data has been accepted, list command determination section 111 outputs an "editing completion command", that causes the editing of the character input screen WND to be completed, to input screen control section 112.

If list command determination section 111 determines that the entry that serves to edit document data has been accepted, then list command determination section 11 determines whether or not input section 15 has accepted an entry that serves to select a "pictorial character - symbol input mode MOD" from the user. If list command determination section 111 determines that the entry that serves to select the pictorial character - symbol input mode MOD has been accepted, list command determination section 111 outputs a "list display command" that causes a list screen ICH to be displayed to list display control section 114.

In this example, the pictorial character - symbol input mode MOD is a "particular character input mode" that is a mode in which "a particular type of character" (in this example, pictorial characters, symbols, and so forth) is input.

In addition, after control section 11 determines that input section 15 has accepted the entry that serves to select the pictorial character - symbol input mode MOD from the user, then list command determination section 111 determines whether or not input section 15 has accepted an entry that serves to complete the pictorial character - symbol input mode MOD from the user. If list command determination section 111 determines that the entry that serves to complete the pictorial character - symbol input mode MOD, list command determination section 111 outputs a "list display completion command" that causes the displaying of the list screen ICH to be completed to list display control section 114.

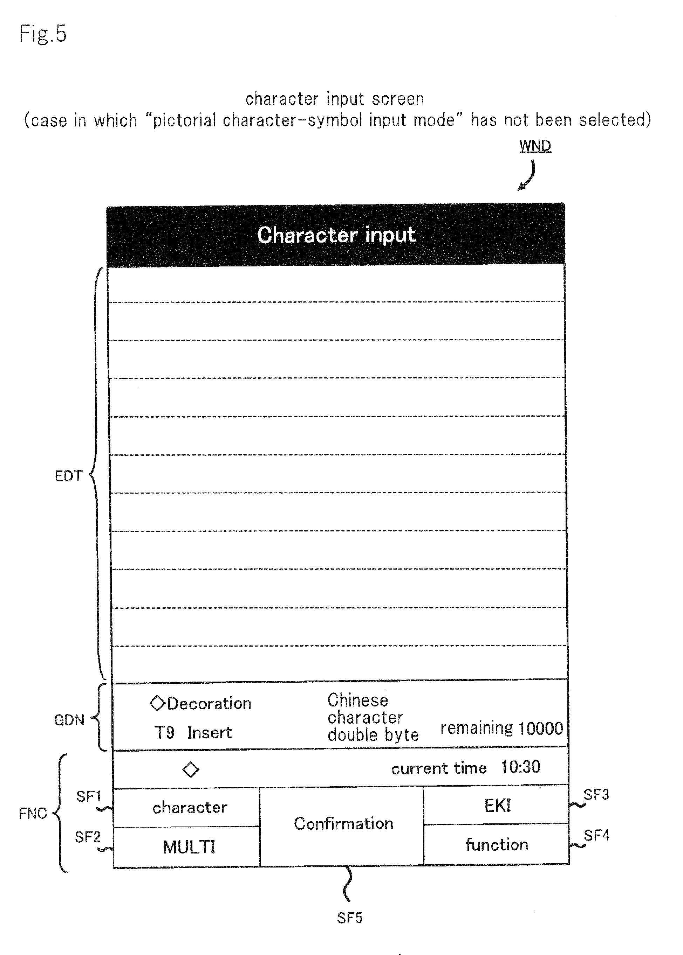

In the state that the list display command has not been output from list command determination section 111 to list display control section 114, if the editing command is output from list command determination section 111, input screen control section 112 reads image data of a character input screen WND shown in Fig. 5 from ROM 12 and outputs the image data of the character input screen WND to display section 16.

In the descriptive example, the character input screen WND shown in Fig. 5 is composed of an editing area EDT, a function area FNC, and a guidance area GDN.

In this example, the editing area EDT is an area that displays characters confirmed as those to be described in document data (for example, text of electronic mail).

On the other hand, the function area FNC is an area that displays functions assigned to soft keys SF1 to SF5.

In the example shown in Fig. 5, the soft key SF1 ("MOJI: Character") is assigned a function that changes an input mode for types of characters other than types of characters that can be input in the pictorial character - symbol input mode MOD. In this descriptive example, it is assumed that character input modes that can be changed by the soft key SF1 are a "Chinese character input mode,"` "Katakana character input mode," "Alphabetic character input mode," and "Numeric character input mode."

On the other hand, the soft key SF2 ("MULTI") is assigned a function that activates another application in the state in which the document data editing (generation of text of electronic mail) function has been activated.

On the other hand, the soft key SF3 ("EKI: Pictorial characters and symbols") is assigned a function that causes the pictorial character - symbol input mode MOD to be selected and the pictorial character - symbol input mode MOD to be completed.

The soft key SF3 is a "particular mode selection key" that changes the current mode to a "particular character input mode."

On the other hand, the soft key SF4 ("KINOU: Function") is assigned a function that evokes a menu of other functions that can be used when document data (for example, text of electronic mail) are edited.

On the other hand, the soft key SF5 ("KAKUTEI: Confirmation") is assigned a function that confirms the entire document data (for example, text of electronic mail) that have been input and completes the input of the document data.

The soft keys SF1 to SF5 correspond to buttons B1 to B5 shown in Fig. 2, respectively, for example, when the button B1 is pressed, the soft key SF 1 is selected.

On the other hand, the guidance area GDN is an area that displays a guidance and so forth that represent the current character input mode. In the guidance area GDN of this descriptive example, character input modes for types of characters other than those of characters that can be input in the pictorial character - symbol input mode MOD (for example, the Chinese character input mode, the Katakana character input mode, the numeric character input mode, and so forth) are displayed.

In the example shown in Fig. 5, although the current time ("10: 30") is displayed in the guidance area GDN using a clock function that control section 11 has, whether or not the current time is displayed may be arbitrary.

On the other hand, if the editing completion command is output from list command determination section 111, input screen control section 112 outputs a signal that causes the displaying of the image data of the character input screen WND to be completed to display section 16.

On the other hand, if mode identification section 113 identifies the input mode and outputs the mode to input screen control section 112, it outputs a signal that causes display section 16 to display the input mode that mode identification section 113 has output instead of the input mode currently displayed in the guidance area GDN (in the example shown in Fig. 5, "KANJI ZEN-KAKU: Chinese characters, double-byte input mode") to display section 16.

If a situation in which an entry that serves to change the input mode has been accepted is output from input section 15 to mode identification section 113, it identifies the changed input mode. Thereafter, mode identification section 113 outputs the identified input mode to input screen display section 113. While display section 16 displays the character input screen WIND shown in Fig. 5, if the user presses the button B 1 corresponding to the soft key SF1 (MOJI: Characters), input section 15 accepts an entry that serves to change the character input mode of a type of character other than types of characters that can be input in the pictorial character - symbol input mode MOD from the user.

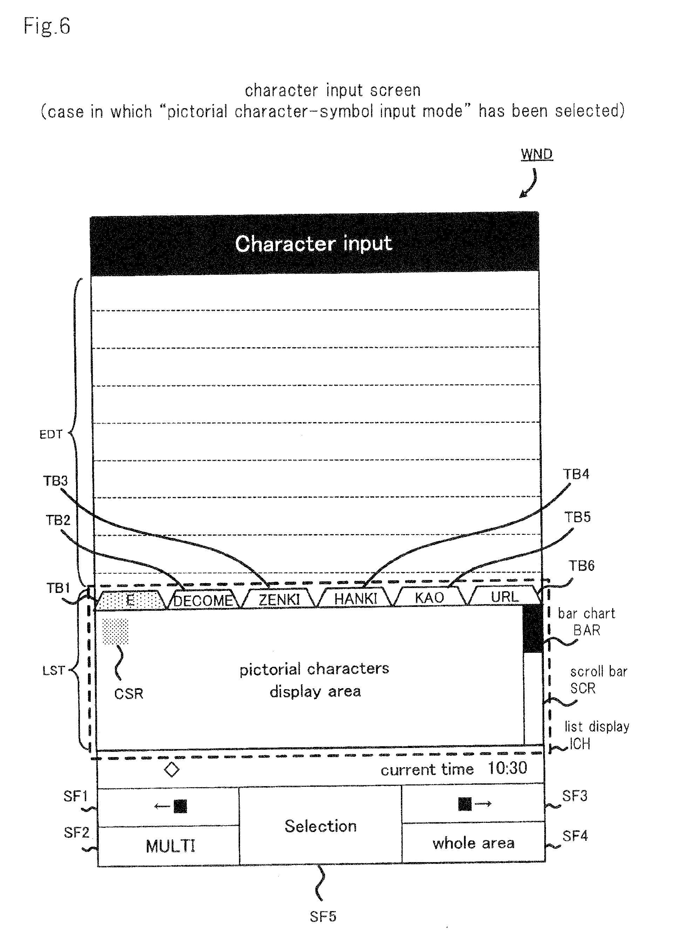

If the list display command is output from list command determination section 111 to list display control section 114, it outputs image data of the list screen ICH to be displayed in a list area LST that is shown in Fig. 6 and that is included in the character input screen WND shown in Fig. 5 to display section 16.

In this descriptive example, when the list display command is output from list command determination section 111 to list display control section 114, it causes display section 16 to display the list screen ICH as shown in Fig. 6 in which the tab TB1 has been selected.

In this case, the tab TB1 corresponds to "a first tab that is any one of the plurality of tabs." The rest of tabs TB2 to TB6 other than the tab TB1 correspond to a "second tab" other than the first tab.

On the other hand, while display section 16 displays the list screen ICH, if the list display completion command is output from list command determination section 111 to list display control section 114, it outputs a signal that causes the displaying of the list screen ICH to be completed to display section 16.

In this example, the "list screen ICH" is a screen on which lists of types of characters that can be input in the pictorial character symbol input mode MOD (particular character input mode) (for example, a list of pictorial characters and a list of symbols) are categorized and that are indicated as using tabs corresponding to the types.

In the example shown in Fig. 6, the list area LST in which the list screen ICH is displayed is located at the same position as the guidance area GDN and a part of the editing area EDT on the character input screen WND shown in Fig. 5. However, the position of the list area LST may be arbitrary on the character input screen WND.

In consideration of convenience to the user who edits document data, however, it is preferred that the area that displays the list screen ICH is an "area that does not overlap with the entire editing area EDT."

The list screen ICH displayed in the list area LST shown in Fig. 6 includes the tabs TB1 to TB6 that categorize and correspond to the lists of pictorial characters and symbols that can be input in the pictorial character symbol input mode MOD.

In the example shown in Fig. 6, the tab TB1 ("E: Pictorial characters") is a tab that corresponds to a list of pictorial characters of animated characters.

On the other hand, the tab TB2 ("DECOME", which means "decoration mail") is a tab corresponding to a list of moving images composed of animated characters (hereinafter referred to as "pictorial characters of decoration mail"), for example, animated GIF images.

On the other hand, the tab TB3 ("ZENKI : Double byte symbols") is a tab corresponding to a list of double byte symbols composed of multiple byte (so-called double byte) data.

On the other hand, the tab TB4 ("hanks : Single byte symbols,") is a tab corresponding to a list of single byte symbols composed of single byte data.

On the other hand, the tab TB5 ("KAO : Emoticons") is a tab corresponding to a list of character strings that have particular meanings and that are composed of double byte symbols, single byte symbols, and so forth (hereinafter these character strings are referred to as "emoticons"). A character string composed of symbols such as (^ - ^) can be exemplified as an emoticon.

On the other hand, the tab TB6 ("URL") is a tab corresponding to a list of character templates with high frequencies of usage (for example, "http://" and "cojp") in URLs (Uniform Resource Locators) designated when an Internet connection is made on portable telephone 1. The URLs are communication target designation information that designates communication targets with which communication section 14 communicates.

In addition, a cursor CSR that points to a pictorial character or symbol that is currently selected is displayed on the list screen TICH.

In addition, list display control section 114 reads data of the list of pictorial character and symbols that correspond to the tab from ROM by which tab selection section 115 has made notification to list display control section 114 while display section 16 displays the list screen ICH and then list display control section 114 outputs the data of the list to display section 16. Then, display section 16 displays the list that has been output from list display control section 114 on the list screen ICH.

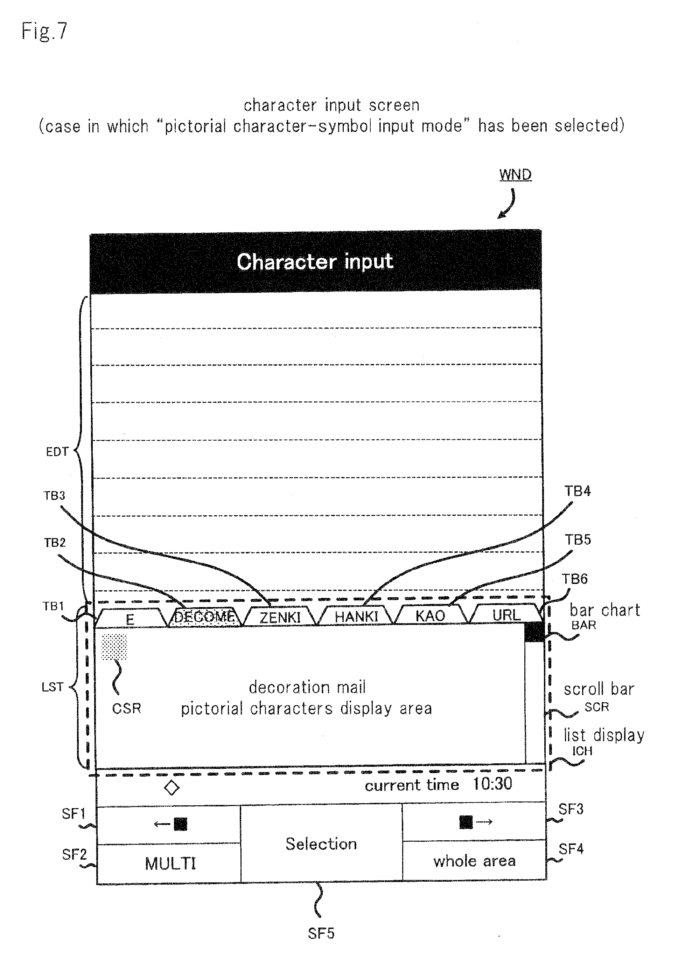

More specifically, while display section 16 displays the character input screen WIND shown in Fig. 6, if list display control section 114 is informed by tab selection section 115 of the tab TB2 (DECOME: "decoration mail"), list display control section 114 reads data of the list of "pictorial characters of decoration mail" corresponding to the tab TB2 from ROM 12 and outputs the data to display section 16. Then, display section 16 displays the list screen ICH. including the list of pictorial character of decoration mail on the character input screen WND as shown in Fig. 7.

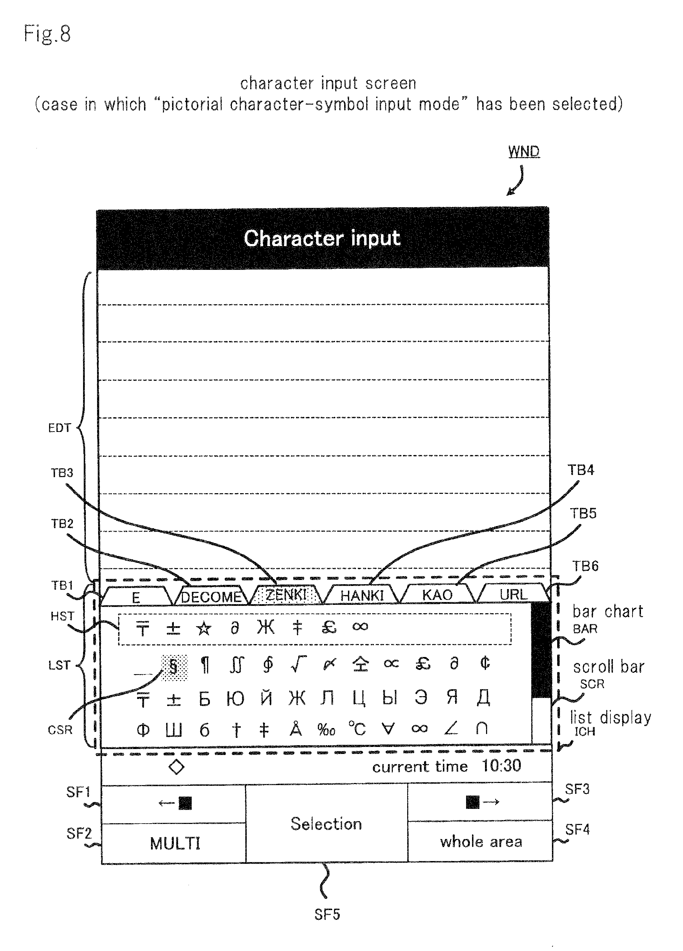

On the other hand, for example, if list display control section 114 is informed of the tab TB3 (ZENKI : Double byte symbols) by tab selection section 115, list display control section 114 reads data of the list of "double byte symbols" corresponding to the tab TB3 from ROM 12 and outputs the data to display section 16. Then, display section 16 displays the list screen ITCH including the list of double byte symbols on the character input screen WND as shown in Fig. 8.

A history area HST shown in Fig. 8 is an area that represents an input history of double byte symbols that input section 15 has accepted an entry that serves to confirm the symbols from the user. With the displaying of the input history, the user can easily input characters with high frequency usage (in the example shown in Fig. 8, double byte symbols).

On the other hand, character selection section 116 selects a character corresponding to an entry that serves to move the cursor CSR, that input section 15 has accepted from the user, from characters indicated in the history area HST or pictorial character and symbols indicated in a list that corresponds to and that is categorized as the selected tab. Thereafter, if a button B5 that accepts an entry that serves to execute a function caused to correspond to the soft key SF5 is pressed, input section 15 accepts an entry that serves to confirm the selected character.

In the case in which any one of the tabs TB1 to TB6 has been selected, if input section 15 accepts an entry from the user that serves to press the button B 1 corresponding to the soft key SF1, tab selection section 115 will select a tab (tab TB6) located on the left of the currently selected tab (in the example shown in Fig. 6, the tab TB1).

On the other hand, in the case in which any one of the tabs TB1 to TB6 has been selected, if input section 15 accepts an entry from the user that serves to press the button B3 corresponding to the soft key SF3 from the user, tab selection section 115 will select a tab (tab TB2) located on the right of the currently selected tab (in the example shown in Fig. 6, tab TB1).

With the indication of pressing direction ("←" or "→") of the soft key SF1 or SF4, when the user selects one tab from among tabs TB1 to TB6, he or she can intuitively and easily know that by pressing the button BT1 or BT3 , movement to the left or right can be performed.

In this example, the soft keys SF1 (←) and SF3 (→) indicated in the pictorial character - symbol input mode MOD (particular character input mode) are "tab selection keys."

Thereafter, tab selection section 115 informs list display control section 114 and chart computation section 117 of the selected tab.

In the case in which display section 16 is structured such that a touch panel is disposed at positions corresponding to the tabs TB1 to TB6 on the list screen ICH, when tab selection section 115 accepts an entry from the user that serves to press the touch panel with which display section 16 is provided, tab selection section 115 will select the tab displayed corresponding to the position at which the touch panel is pressed.

While display section 16 displays the list screen ITCH, if input section 15 accepts an entry from the user that serves to press a four-way directional button DIR that can be pressed in any one direction of up, down, left, and right, character selection section 116 will select a pictorial character or symbol displayed on the list screen ICH depending on the pressing direction.

For example, if input section 15 accepts an entry from the user that serves to press the four-way directional button DIR, character selection section 116 will select a character displayed on the left of the currently selected character on the list screen ICH.

Chart computation section 117 computes a "display completion rate RT" corresponding to a character that character selection section 116 has selected. In addition, chart computation section 117 generates an image of a chart that represents the computed display completion rate RT and outputs the image of the chart to list display control section 114. Then, list display control section 114 causes display section 16 to display the image of the chart that chart computation section 117 has output.

In this example, the "display completion rate RT" represents the ratio of the number of pictorial characters or symbols that list display control section 114 has caused display section 16 to display to the total number of pictorial characters or symbols included in the tab that tab selection section 115 currently selects on the list screen ICH.

If the total number of symbols included in the list of characters whose type corresponds to the tab TB3 (double byte symbols) is 100 and if list display control section 114 has already caused display section 16 to display 50 symbols, the display completion rate RT will be 50/100 = 0.5.

Although the method that computes the "display completion rate RT" is not limited, in this descriptive example, chart computation section 117 computes the total number of characters that belongs to the list of characters whose type corresponds to the tab that tab selection section 115 currently selects. Thereafter, chart computation section 117 assigns sequence numbers that are the same values as those in the list of characters whose type corresponds to the tab that tab selection section 115 has selected. Thereafter, chart computation section 117 decides the value in which the assigned sequence number assigned of the character that character selection section 116 selects is divided by the total number of characters that belong to the list of characters whose type corresponds to the tab as the display completion rate RT.

The image of the chart that chart computation section 117 generates may be arbitrary. For example, the image may be a pie chart in which a fan shape that defines a circumferential area corresponding to the value of the display completion rate RT is concentrically superimposed on a circle that has an area corresponding to the total number of pictorial characters and symbols included in the tab that tab selection section 115 currently selects.

In this descriptive example, the image of the chart that chart computation section 117 generates will be described as a bar chart BAR in which a rectangle whose area longitudinally increases or decreases from the end of the rectangle corresponding to the value of the display completion rate RAT is superimposed on a rectangle that has an area corresponding to the total number of pictorial characters and symbols included in the tab that tab selection section 115 currently selects.

In the example shown in Fig. 8, a scroll bar SCR shown in Fig. 8 represents a rectangle that has an area corresponding to the total number of pictorial characters and symbols included in the tab TB3 that tab selection section 115 currently selects. A black portion shown in Fig. 8 represents a rectangle that increases corresponding to the value of the display completion rate RT. If all characters (in this example, double byte symbols) included in the list assigned to the tab TB3 can be displayed in the list area LST, the scroll bar SCR will be entirely covered with the bar chart BAR.

While the list screen ICH. is displayed, if input section 15 accepts an entry from the user that serves to scroll downward through the four-way directional button DIE, the area of the bar chart BAR (black portion) will increase downward on the scroll bar SCR. Thus, the user can intuitively and easily recognize what part of the list of characters that is included in the selected tab TB3 will be displayed.

Since the image of the bar chart BAR that represents the display completion rate RT that chart computation section 117 has computed is displayed, even if the number of pictorial characters and symbols included in the list of pictorial characters and symbols corresponding to the tab that tab selection section 115 currently selects is greater than the number of pictorial characters and symbols that can be displayed in the list area LST, the user can intuitively and easily recognize what part of the list that is included in the tab TB3 that is currently selected will be displayed without the necessity of directly operating the four-way directional button DIR.

While character selection section 116 selects a pictorial character or symbol from the list screen ICH, if input section 15 accepts an entry from the user that serves to confirm the pictorial character or symbol as a character to be described in document data, confirmation section 118 decides the pictorial character or symbol that character selection section 116 has selected as one to be displayed in the editing area EDT on the character input screen WND.

T hereafter, confirmation section 118 outputs the pictorial character or symbol decided to be displayed in the editing area EDT on the character input screen WND to display section 16. Then, display section 16 displays the pictorial character or symbol that is output from confirmation section 118 in the editing area EDT on the character input screen WND.

Other operation control section 11B shown in Fig. 3 controls other than each operation of those controlled by character input control section 11A, namely, each operation other than the character input operation.

Decoder/encoder 11C converts (encodes) a signal that is output from character input control section 11A or other operation control section 11B into a signal format that is output to bus 19 (for example, address and data).

In addition, decoder/encoder 11C converts (decodes) a signal that is input from bus 19 into a signal format that is output to character input control section 11A or other operation control section 11B.

ROM 12 is a "storage section" that stores arbitrary data.

ROM 12 stores a program that causes control section 11 to perform various controls (for example, communication control and power save control) and an application that creates electronic mail.

In addition, ROM 12 stores image data that represent the character input screen WND on which the user inputs characters.

In addition, ROM 12 stores image data that represent the list screen WND displayed in the pictorial character - symbol input mode MOD.

In addition, ROM 12 categorizes and stores data that represent individual characters (including particular types of characters) that the user can input on portable telephone 1.

In this example, the types of characters that the user can input are not specifically limited. In this example, it is assumed that the types of characters that the user can input are Hiragana characters, Katakana characters, Chinese characters, pictorial characters, pictorial characters of moving images, and symbols.

In addition, ROM 12 (storage section) stores tab selection keys and pre-designated ones of a plurality of input buttons such that they are caused to correspond to each other. If an input button that is caused to correspond to a tab selection key is pressed, list display control section 114 recognizes that the tab selection key will have been selected.

In addition, ROM 12 stores audio data of various melodies and so forth that are output from speaker 18.

RAM 13 is a "storage section" that stores arbitrary data.

RAM 13 stores data that input section 15 accepts from the user. In addition, RAM 13 stores electronic mail transmitted from the outside to portable telephone 1 and is also used as a work area with which control section 11 executes processes.

Communication section 14 communicatively connects portable telephone 1 and an external terminal device that is a communication target and transmits and receives arbitrary data to and from the external terminal device (not shown).

For example, communication section 14 transmits electronic mail including text that was edited to an external terminal device (not shown).

Input section 15 has various types of keys (a ten key pad TEN, buttons BT1 to BT5 corresponding to soft keys TB1 to TB5, and keys located outside when portable telephone 1 is folded) and accepts an input of data corresponding to an operation that the user performs with the keys. Thereafter, input section 15 outputs the accepted input data to control section 11.

Individual keys of the ten key pad TEN with which input section 15 is provided are assigned Hiragana characters, alphanumeric characters, and so forth. In other words, if a character input mode other than the pictorial character - symbol input mode MOD has been selected, input section 15 accepts an entry that serves to select and confirm a character that the user desires in the editing area EDT on the character input screen WND through the ten key pad TEN.

In addition, input section 15 accepts an entry that serves to select a character that the user desires from pictorial characters and symbols displayed in the list screen ICH in the pictorial character - symbol input mode MOD through the four-way directional button DIR, that can be pressed in any one of up, down, left, and right directions. Screen display control section 114 causes the cursor CSR shown in Fig. 6 to be moved and displayed corresponding to the direction in which the four-way directional button DIR. is pressed.

On the other hand, when the buttons B1 to B5 of input section 15 are pressed, processes assigned thereto vary depending on the operation mode in which portable telephone 1 operates.

In other words, input section 15 accepts an entry from the user that serves to execute a function caused to correspond to each of the soft keys SF 1 to SF4 shown in Fig. 5 through the buttons B1 to B4, respectively.

In addition, input section 15 accepts an entry from the user that serves to execute a function caused to correspond to the soft key SF5 through the button B5 concentrically located inside the four-way directional button DIR. For example, while "KAKUTEI: Confirmation" is indicated when the button B5 is pressed as the soft key SF5 on the character input screen WND as shown in Fig. 5, input section 15 accepts an entry from the user that serves to confirm the selected character as a character to be described in the text.

Display section 16 displays arbitrary data, for example characters that input section 15 accepts.

In addition, display section 16 displays the character input screen WND and the list screen ICH that are output from character input control section 11A.

Display section 16 may have a touch panel function. In this case, display section 16 also has a function as input section 15 that inputs information from the outside.

Microphone 17 inputs a voice during a telephone call. Speaker 18 generates the voice of the communication party during a telephone call.

Bus 19 mutually connects the above-described components to each other. Although Fig. 3 exemplifies the structure in which the individual components are mutually connected through bus 19, if necessary, the individual components may be connected with discrete lines.

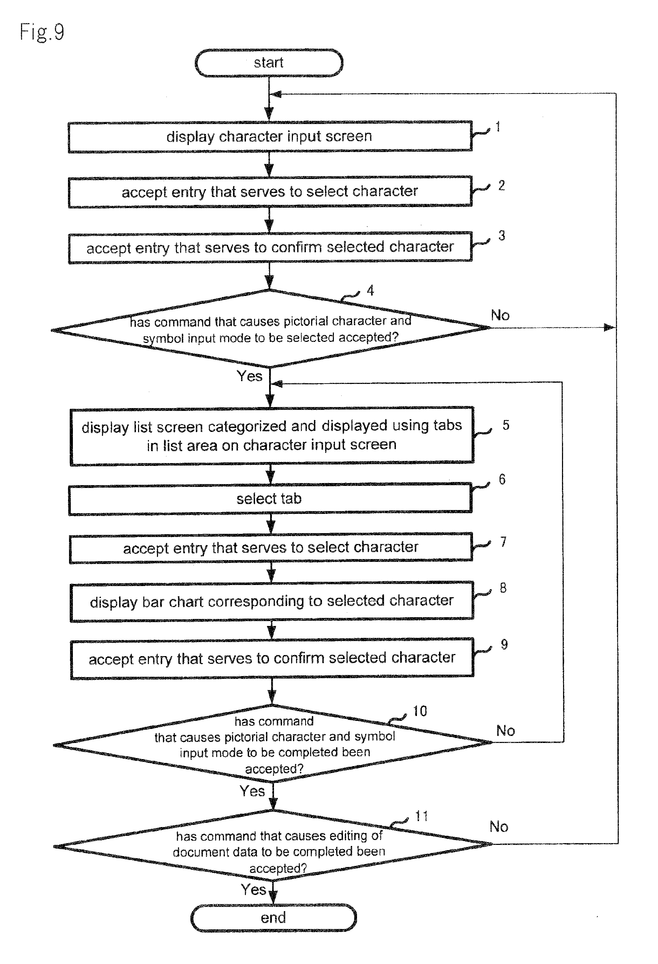

Next, with reference to a flowchart shown in Fig. 9, an operation performed when portable telephone 1 that has the above-described structure accepts the input of a character from the user will be described.

In the following, a case in which the user inputs characters and edits text of electronic mail on portable telephone 1 will be exemplified.

When input section 15 accepts a command that activates the electronic mail function and a command that newly creates mail (namely, an editing command for document data) from the user on portable telephone 1, list command determination section 111 outputs an editing command that causes the character input screen WND to be displayed to input screen control section 112.

Then, input screen control section 112 reads the image data of the character input screen WND shown in Fig. 5 from ROM 12 and outputs the image data to display section 16.

Then, at step 1, display section 16 displays the image data of the character input screen WND that have been output from input screen control section 112 and that is shown in Fig. 5.

While display section 16 displays the character input screen WND shown in Fig. 5 at step 1, input section 15 is in the state in which it can accept an entry that serves to select Hiragana characters, Katakana characters, Chinese characters, and so forth from the user. In addition, at this point, input section 15 is in the state in which it can accept an entry that serves to select the pictorial character - symbol input mode MOD from the user.

While display section 16 displays the character input screen WND shown in Fig. 5, if input section 15 accepts an entry that serves to select a character input mode in which the user inputs his or her desired type of character and an entry that serves to select a character in the selected character input mode from him or her, then at step 2, character selection section 116 selects the characters that input section 15 has accepted.

Thereafter, while character selection section 116 selects a character from the character input screen WND shown in Fig. 5, if input section 15 accepts an entry that serves to confirm the character as one to be described in the text, then at step 3, confirmation section 118 decides the character that character selection section 116 has selected as a pictorial character or symbol to be displayed in the editing area EDT on the character input screen WND.

Then, display section 16 displays the character that confirmation section 118 has confirmed at step 3 in the editing area EDT on the character input screen WND shown in Fig.

Thereafter, at step 4, list command determination section 111 determines whether or not input section 15 has accepted an entry that serves to select the pictorial character - symbol input mode MOD from the user.

In this descriptive example, while the character input screen WND shown in Fig. 5 is displayed, if the user presses the button B3 that causes a function that corresponds to the soft key SF3 (EKI : Pictorial characters and symbols), list command determination section 111 determines that input section 15 has accepted the entry from the user that serves to select the pictorial character - symbol input mode MOD.

If list command determination section 111 determines the entry that serves to select the pictorial character - symbol input mode MOD, list command determination section 111 outputs a list display command that causes the list screen ICH to be displayed to list display control section 114.

Then, list display control section 114 reads the image data of the list screen ICH shown in Fig. 6 from ROM 12 and outputs the image data to display section 16.

Then, at step 5, display section 16 displays the list screen ICH that categorizes lists of "particular types of characters" (for example, pictorial characters and symbols) that can be input in the pictorial character - symbol input mode MOD by types in the list area LST on the character input screen WND that is currently displayed. In this case, the screen displayed by display section 16 is the character input screen WND shown in Fig. 6.

While display section 16 displays the list screen ICH and any one of the tabs TB 1 to TB6 has been selected at step 5, tab selection section 115 determines whether or not input section 15 has accepted an entry from the user that serves to press either the button B 1 that corresponds to the soft key SF1 or the button B3 that corresponds to the soft key SF3.

The, at step 6, if tab selection section 115 determines that the entry that serves to press either the button B1 or B3 has been accepted, tab selection section 115 selects a tab that is adjacent to the currently selected tab and that is located in a predetermined direction corresponding to the pressed button B1 or B3. Thereafter, tab selection section 115 informs list display control section 114 of the selected tab.

Then, list display control section 114 reads data of the list of pictorial characters and symbols that correspond to the tab from ROM 12 by which tab selection section 115 has made notification to list display control section 114, and outputs the data of the list to display section 16. Then, display section 16 displays the list screen ICH. that displays the list of pictorial characters and symbols corresponding to the tab by which tab selection section 115 has informed list display control section 114.

For example, while display section 16 displays the list screen ICH. that corresponds to the tab TB 1 and that is shown in Fig. 6, if tab selection section 115 informs list display control section 114 of the tab TB2, then, at step 5, display section 16 displays the list screen ICH that displays a list corresponding to the tab TB2 and that is shown in Fig. 7.

While display section 16 displays the list screen ICH at step 5, if input section 15 accepts an entry from the user that serves to press the four-way directional button DIR, then, at step 7, character selection section 116 selects a pictorial character or symbol from those displayed on the list screen ICH in the direction in which the four-way directional button DIR has been pressed. For example, if input section 15 accepts an entry from the user that serves to press the four-way directional button DIR leftward, character selection section 116 selects a character displayed on the left of the currently selected character on the list screen ICH.

Then, at step 8, chart computation section 117 computes the display completion rate RT corresponding to the character that character selection section 116 has selected, generates an image of the bar chart BAR that represents the display completion rate RT, and outputs the image to list display control section 114. Then, list display control section. 114 causes display section 16 to display the bar chart BAR that chart computation section 117 has output.

On the other hand, while character selection section 116 selects pictorial characters and symbols at step 7, if input section 15 accepts an entry from the user that serves to confirm the pictorial characters and symbols as characters to be described in the text, then, at step 9, confirmation section 118 decides the pictorial characters and symbols that character selection section 116 has selected as pictorial characters and symbols that are to be displayed in the editing area EDT on the character input screen WND.

Thereafter, confirmation section 118 outputs the pictorial characters and symbols decided to be displayed in the editing area EDT on the character input screen WND to display section 16.

Then, display section 16 displays the pictorial characters and symbols that has been output from confirmation section 118 in the editing area EDT on the character input screen WND.

Then, at step 10, list command determination section 111 determines whether or not input section 15 has accepted an entry from the user that serves to complete the pictorial character - symbol input mode MOD.

If list command determination section 111 determines that the entry that serves to complete the pictorial character - symbol input mode MOD has not been accepted, then, at step 5, list display control section 114 reads the image data of the list screen ICH from ROM 12 and outputs the image data to display section 16. Then, display section 16 displays the image data of the list screen ICH that have been output from list display control section 114.

In contrast, if list command determination section 111 determines that the entry that serves to complete the pictorial character - symbol input mode MOD has been accepted, list command determination section 111 outputs a list display completion command that causes displaying of the list screen ICH to be completed to list display control section 114.

Then, list display control section 114 outputs a signal that causes the displaying of the list screen ICH to be completed to display section 16. In this case, display section 16 completes the displaying of the list screen ICH.

In contrast, if list command determination section 111 determines that the entry that serves to complete the pictorial character - symbol input mode MOD has been accepted at step 10, then at step 11, list command determination section 111 determines whether or not input section 15 has accepted an entry from the user that serves to complete the editing of text data (in this example, creation of text of electronic mail).

The case in which it is determined, that the entry that serves to complete the editing of the text data has not been accepted at step 11, corresponds to the case in which the editing of text data is continued. Thus, list command determination section 111 outputs an editing command that causes the character input screen WND to be displayed to input screen control section 112.

Then, input screen control section 112 reads the image data of the character input screen WIND shown in Fig. 5 from ROM 12 and outputs the image data of the character input screen WND to display section 16. In this case, at step 1, display section 16 displays image data of the character input screen WND shown in Fig. 5.

In contrast, if list command determination section 111 determines that the entry that serves to complete the editing of the text (document data) of electronic mail has been accepted, list command determination section 111 outputs an editing completion command that causes the displaying of the character input screen WND to be completed to input screen control section 112.

Thus, input screen control section 112 outputs a signal that causes displaying of the image data of the character input screen WND to be completed to display section 16. In this case, display section 16 completes displaying of the image data of the character input screen WIND.

As described above, according to the present invention, if list command determination section 111 determines that the entry that serves to select the pictorial character - symbol input mode MOD has been accepted, list display control section 114 displays the list screen ICH in which lists of particular types of characters (for example, pictorial characters, double byte symbols, and single byte symbols) are categorized and are indicated using tabs corresponding to the types in an area that does not overlap with the entire editing area EDT on the character input screen WND. Thus, the user can distinguish a type of character that can be input on the list screen ICH at glance.

Thereafter, if input section 15 accepts an entry from the user that serves to select any one of the tabs, tab selection section 115 selects a tab corresponding to the entry from the list screen ICH. Then, list display control section 114 displays a list of characters whose type is assigned to the tab selected by tab selection section 115 in an area that does not overlap with the entire editing area EDT on the character input screen WND.

Thus, even if the user inputs a particular type of character such as pictorial characters and symbols on a portable electronic device such as a portable telephone having a limited number of keys arranged due to the ongoing demand for miniaturization, the user can easily change the current screen to a screen that accepts an input of the particular type of character, without reducing convenience to the user who edits document data displayed on the display with which the portable electronic device is provided.

In addition, according to the present invention, chart computation section 117 computes the display completion rate RT corresponding to a character that character selection section 116 selects, generates an image of a chart (for example, a bar chart BAR) that represents the display completion rate RT, and outputs the image to list display control section 114. Then, list display control section 114 causes display section 16 to display the image of the chart that chart computation section 117 has output together with the scroll bar SCR.

Thus, even if the number of characters that can be input in the pictorial character - symbol input mode MOD is greater than the number of characters that can be displayed on the screen of display section 16, the user can intuitively and easily recognize what part of the list of characters included in the selected tab is displayed without the need to perform an entry that serves to display all characters included in a selected list by directly operating the four-way directional button DIR.

Various modification can be made without departing from the spirit of the present invention.

Tabs on the list screen ICH displayed if the entry that serves to press the soft key SF3 (EKI : Pictorial characters and symbols) is accepted from the user may not be assigned corresponding to individual types of characters. For example, a tab on the list screen ICH may be caused to correspond to a particular word and when the tab is selected, a list of associative transformation candidates that is a list of word candidates associated with the particular word may be displayed. For example, if a tab is caused to correspond to a particular word (today), phrases, pictorial characters, pictorial characters of decoration mail, and so forth that are associated from the word "today" may be included in the list corresponding to the tab.

In addition, keys for entries that serve to select the tabs TB 1 to TB6 are not limited to the button D1 and the button B3. For example, if input section 15 accepts an entry from the user that serves to press the four-way directional button DIR either leftward or rightward, tab selection section 115 may select a tab (the tab TB2) that is adjacent to the selected tab and that is located in the direction (for example, rightward) in which the four-way directional button DIR has been pressed for the selected tab (in the example shown in Fig. 6, the tab TB1).

In addition to the structure in which processes of portable telephone 1 are realized by the above-described dedicated hardware, the present invention may be realized by causing a program that realizes the functions to be recorded onto a record medium from which portable telephone 1 can read the program and then causing portable telephone 1 to read the program from the record medium and execute it. The record medium that portable telephone 1 can use to read the program is an HDD or the like built in portable telephone 1 along with movable record mediums such as a floppy disk (registered trademark), a magneto optical disc, a DVD and a CD. The program recorded on the record medium is read by control section 11 that portable telephone 1 has and processes similar to the above-described ones are performed under the control of control section 11.

In this example, control section 11 that portable telephone 1 has operates as a computer that executes the program read from the record medium onto which the program is recorded.

Now, the present invention has been described. However, it should be understood by those skilled in the art that the structure and details of the present invention may be changed in various manners without departing from the scope of the present invention.

This application is based upon and claims the benefit of priority from Japanese Patent Application No. 2008- 263991 filed on October 10,2008, the content of which is incorporated by reference.

### DESCRIPTION OF REFERENCE NUMERALS

- 1: Portable telephone
- 11: Control section
- 11A: Character input control section
- 11B: Other operation control section
- 11C: Decoder/encoder
- 111: List command determination section
- 112: Input screen control section
- 113: Mode identification section
- 114: List display control section
- 115: Tab selection section
- 116: Character selection section
- 117: Chart computation section
- 118: Confirmation section
- 12: ROM
- 13: RAM
- 14: Communication section
- 15: Input section
- 16: Display section
- 17: Microphone
- 18: Speaker

## Claims

1. A portable electronic device comprising:
a plurality of input buttons that serve to input characters;
a display section that displays an editing screen that serves to edit a sentence using the characters that have been input;
a storage section that categorizes particular types of characters and stores them as categorized;
an input screen control section that causes said display section to display a particular mode selection key that serves to change to a particular character input mode in which said particular types of characters are input; and
a list display control section that reads said particular types of characters from said storage section and causes said display section to display a plurality of tabs caused to correspond to the particular types of characters that have been read and a type of character caused to correspond to a first tab that is any one of the plurality of tabs such that they do not entirely cover said editing screen if the particular mode selection key displayed on said display section is selected by a user,
wherein said list display control section changes a type of character to be displayed on said display section from a type of character caused to correspond to said first tab to a type of character caused to correspond to a second tab other than said first tab if said second tab other than said first tab of the plurality of tabs that said display section displays is selected by the user.

2. The portable electronic device according to claim 1, further comprising:
a chart computation section that computes a display completion rate that is a ratio of the number of characters that have been displayed on said display section to the number of characters whose type is caused to correspond to said selected tab and that generates a chart that represents the display completion rate if the number of characters whose type is caused to correspond to said selected tab exceeds the number that can be displayed on said display section,
wherein said list display control section causes said display section to display said chart such that said chart does not entirely cover said editing screen.

3. The portable electronic device according to claim 1,
wherein said list display control section causes said display section to display a tab selection key that serves to select said tab and, if the tab selection key is selected, said list display control section changes the type of character to be displayed on said display section from a type of character that is currently displayed to a type of character caused to correspond to a tab selected by the tab selection key.

4. The portable electronic device according to claim 3,
wherein said storage section stores a correspondence of said tab selection key and a pre-designated input button from among said plurality of input buttons,
wherein said list display control section recognizes that the tab selection key is selected if the input button caused to correspond to said tab selection key is pressed.

5. A character input screen display method, comprising:
an input screen control process that causes a display section that displays an editing screen that serves to edit a sentence using characters that are input through a plurality of input buttons that serve to input characters to display a particular mode selection key that changes to a particular character input mode in which particular types of characters are input; and
a list display control process that causes said display section to display a plurality of tabs caused to correspond to the particular types of characters and a type of character caused to correspond to a first tab that is any one of the plurality of tabs such that they do not entirely cover said editing screen if the particular mode selection key displayed on said display section is selected by a user,
wherein said list display control process changes a type of character to be displayed on said display section from a type of character caused to correspond to said first tab to a type of character caused to correspond to a second tab other than said first tab if said second tab other than said first tab of the plurality of tabs displayed by said display section is selected by the user.

6. The character input screen display method according to claim 5, further comprising:
a chart computation process that computes a display completion rate that is a ratio of the number of characters that have been displayed on said display section to the number of characters whose type is caused to correspond to said selected tab and that generates a chart that represents the display completion rate if the number of characters whose type is caused to correspond to said selected tab exceeds the number that can be displayed on said display section,
wherein said list display control process causes said display section to display said chart such that said chart does not entirely cover said editing screen.

7. The character input screen display method according to claim 5,
wherein said list display control process causes said display section to display a tab selection key that serves to select said tab and, if the tab selection key is selected, said list display control process changes the type of character to be displayed on said display section from a type of character that is currently displayed to a type of character caused to correspond to a tab selected by the tab selection key.

8. A program that causes a portable electronic device that has a display section that displays an editing screen that serves to edit a sentence using characters that are input to execute the procedures comprising:
an input screen control procedure that causes said display section to display a particular mode selection key that serves to change to a particular character input mode in which particular types of characters are input; and
a list display control procedure that causes said display section to display a plurality of tabs caused to correspond to the particular types of characters and a type of character caused to correspond to a first tab that is any one of the plurality of tabs such that they do not entirely cover said editing screen if the particular mode selection key displayed on said display section is selected by a user,
wherein said list display control process changes a type of character to be displayed on said display section from a type of character caused to correspond to said first tab to a type of character caused to correspond to a second tab other than said first tab if said second tab other than said first tab of the plurality of tabs displayed by said display section is selected by the user.

9. The program that causes said portable electronic device to execute the procedures according to claim 8, further comprising:
a chart computation procedure that computes a display completion rate that is a ratio of the number of characters that have been displayed on said display section to the number of characters whose type is caused to correspond to said selected tab and that generates a chart that represents the display completion rate if the number of characters whose type is caused to correspond to said selected tab exceed the number that can be displayed on said display section,
wherein said list display control procedure causes said display section to display said chart such that said chart does not entirely cover said editing screen.

10. The program according to claim 8,
wherein said list display control procedure causes said display section to display a tab selection key that serves to select said tab and, if the tab selection key is selected, to changes the type of character to be displayed on said display section from a type of character that is currently displayed to a type of character caused to correspond to a tab selected by the tab selection key.
